# EUROPEAN PATENT APPLICATION

(11) **EP 1 734 080 A1**
(43) Date of publication of application: **20.12.2006**
(21) Application number: 05728060.4
(22) Date of filing: 30.03.2005
(51) Int. Cl.: C09B 23/00, B41M 5/26, G11B 7/24, G11B 7/26

(54) **MONOMETHINE DYE COMPOUND, OPTICAL INFORMATION RECORDING MEDIUM UTILIZING THE COMPOUND AND PROCESS FOR PRODUCING THE SAME**

(30) Priority: 30.03.2004 JP 2004101442
(71) Applicant: Taiyoyuden Co., Ltd., Tokyo 110-0005 (JP)
(72) Inventor: MORISHITA, Daisuke, Taiyo Yuden Co., Ltd., Tokyo 110-0005 (JP); OKITSU, Isao, Taiyo Yuden Co., Ltd., Tokyo 110-0005 (JP); UCHIDA, Mamoru, Taiyo Yuden Co., Ltd., Tokyo 110-0005 (JP); KODAIRA, Takuo, Taiyo Yuden Co., Ltd., Tokyo 110-0005 (JP); HIRATSUKA, Hiroshi, Kiryu-shi, Gunma 376-0002 (JP); HORIUCHI, Hiroaki, Kiryu-shi, Gunma 376-0011 (JP); FUKITA, Maiko, Kiryu-shi, Gunma 376-0011 (JP)
(74) Representative: Muttock, Neil John
(86) International application number: PCT/JP2005/006724
(87) International publication number: WO 2005/095521

(57) **Abstract**

[PROBLEMS] To provide a monomethine dye compound that enables formation of a thin film with high refractive index and excellent optical properties through formation of a homogeneous thin film of dye molecule J-association complex by easy means (spin coating technique) and that has high sensitivity and excels in short mark recording capability so as to be suitable for high speed recording and high density recording, and further to provide an optical information recording medium utilizing the monomethine dye compound and a process for producing the same.

[MEANS FOR SOLVING PROBLEMS] Attention has been focused on employment of a spin coating technique so that a homogeneous thin film can be easily formed through coating; on using of a dye material capable of forming a J-association complex to thereby realize excellent optical properties (high refractive index); on using of an oxocyanine dye of high solubility as the dye material so as to enable employment of a solvent free from substrate erosion; on using of a dye exhibiting a large difference between refractive index before recording and refractive index after recording, the decomposition of the dye brought about by an endothermal reaction; etc. There is provided a monomethine dye compound of Fig. 1 **characterized in that** it is applicable onto a substrate by a spin coating technique.

## Description

This application is based on International Application No. PCT/JP2005/0006724 filed March 30, 2005, which claims priority to Japanese Patent Application No. 2004-101442 filed March 30, 2004.

### TECHNICAL FIELD

This invention relates to a monomethine dye compound, an optical information medium comprising the monomethine dye compound and a method of manufacturing the optical information medium. In particular, this invention relates to a monomethine dye compound which can be used for forming an optical recording layer of an optical information recording medium, which contains at least a photoabsorptive substance and is capable of writing information in a high density and at a high speed and of regenerating the information by means of a semiconductor laser such as a red laser beam having a wavelength of 750-830nm, a short wavelength red laser beam having a wavelength of 640-680nm (for example, 650-665nm), or a blue laser beam having a short wavelength in the vicinity of 350-500nm (for example, around 405nm). Further, this invention relates to an optical information medium to be obtained by making use of such a monomethine dye compound and to a method of manufacturing the optical information medium using such a monomethine dye compound.

### BACKGROUND ART OF THE INVENTION

Up to date, there has been developed an optical information recording medium which is capable of recording and regenerating information by means of a blue laser beam having a wavelength in the vicinity of 350-500nm (for example, around 405nm) which is shorter in wavelength than that conventionally employed. In this optical information recording medium, an organic dye compound is employed for creating an optical recording layer, which is required to be formed increasingly thinner and to have a higher refractive index as the laser beam to be employed is getting shorter in wavelength.

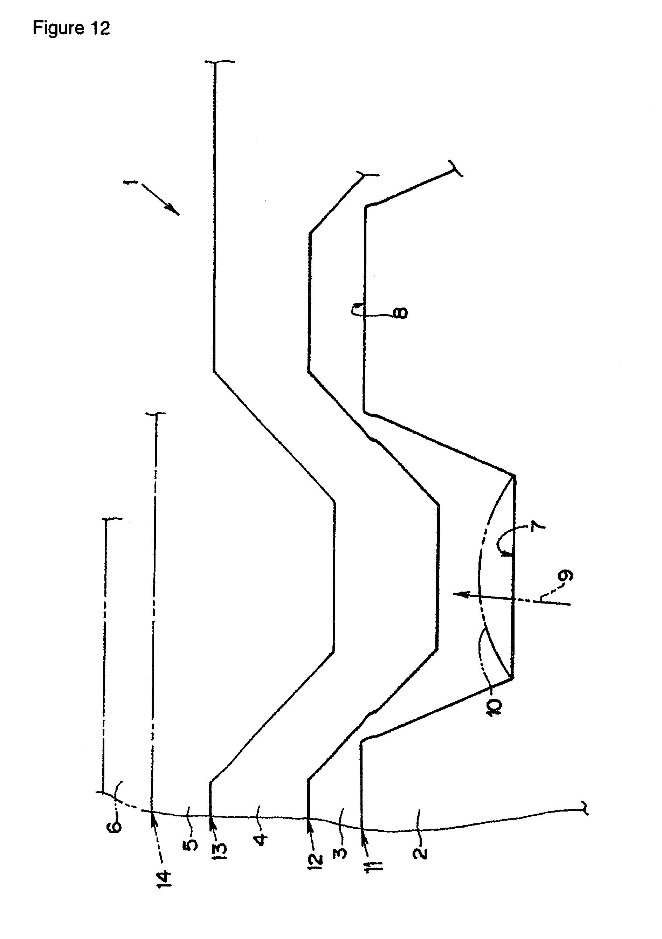

A general structure of an optical information recording medium 1 (HD DVD of write once type) which is capable of recording and regenerating information by means of a blue laser beam will be explained with reference to FIG. 12. FIG. 12 illustrates an enlarged cross-sectional view of a main portion of a disc-like optical information recording medium 1. More specifically, FIG. 12 is an enlarged cross-sectional view schematically illustrating a main portion of the optical information recording medium 1 as it is sectioned diametrally, i.e. a cross-section of the optical information recording medium 1 as it is sectioned perpendicular to the surface provided with a pre-groove 7 and also perpendicular to the direction of the pre-groove 7.

This optical information recording medium 1 comprises a light-transmitting substrate 2 as a layer for transmitting a laser beam, an optical recording layer 3 (light-absorptive layer) formed on the substrate 2, a light-reflecting layer 4 formed on the optical recording layer 3, and a protective layer 5 (adhesive layer) formed on the light-reflecting layer 4. By the way, under some circumstances, a dummy layer 6 having a predetermined thickness may be laminated on the top of the protective layer 5 so as to make the optical information recording medium 1 have a predetermined thickness which is required by the specification.

The substrate 2 is provided in advance with a pre-groove 7 which is formed spirally. On both sides of this pre-groove 7, there are located lands 8 constituting the regions other than the pre-groove 7.

As shown in FIG. 12, as a laser beam (recording beam) 9 is irradiated onto the optical information recording medium 1 from the light-transmitting substrate 2 (incident layer) side, the optical recording layer 3 is caused to generate heat (or absorb heat) as the energy of the laser beam 9 is absorbed by the optical recording layer 3, thereby forming a recording pit 10 through the thermal decomposition of the optical recording layer 3.

By the way, the substrate 2 is contacted, through a first boundary layer (or interface) 11, with the optical recording layer 3.

The optical recording layer 3 is contacted, through a second boundary layer 12, with the light-reflecting layer 4.

The light-reflecting layer 4 is contacted, through a third boundary layer 13, with the protective layer 5.

The protective layer 5 is contacted, through a fourth boundary layer 14, with the dummy layer 6.

The light-transmitting substrate 2 can be generally formed using a resin having a high transparency exhibiting a refractive index ranging from about 1.5 to 1.7 to a laser beam and being excellent in impact resistance. For example, the light-transmitting substrate 2 can be formed using a resin plate such as a polycarbonate plate, an acrylic plate, an epoxy resin plate, etc. It is also possible to use a glass plate as the light-transmitting substrate 2.

The optical recording layer 3 deposited on the substrate 2 is formed of a layer made of a light-absorptive substance (a light-absorbing substance) including a dye material. This optical recording layer 3 is enabled, through the irradiation of a laser beam, to take place the generation of heat, the absorption of heat, melting, sublimation, deformation or denaturing. This optical recording layer 3 can be formed, for example, by uniformly coating an azo-based dye, a cyanine dye, etc., which has been dissolved in a solvent, on the surface of substrate 2 by means of spin-coating method, etc.

With respect to the materials to be employed for forming the optical recording layer 3, although it is possible to employ any kind of optical recording materials, it is more preferable to employ a photoabsorptive organic dye.

The light-reflecting layer 4 is formed of a metal film which is high in heat conductivity and light reflectance, and can be created by the deposition of gold, silver, copper, aluminum, or an alloy comprising any of these metals by means of vapor deposition method, sputtering method, etc.

The protective layer 5 can be formed, as in the case of the substrate 2, by making use of a resin which is excellent in impact resistance and adhesion. For example, the protective layer 5 can be formed by coating an ultraviolet-curing resin on the light-reflecting layer 4 by means of spin-coating method and by curing the coated layer through the irradiation of ultraviolet rays thereto.

The dummy layer 6 can be formed by making use of the same kinds of materials as in the case of forming the substrate 2, thereby securing a predetermined thickness (about 1. 2mm) of the optical information recording medium.

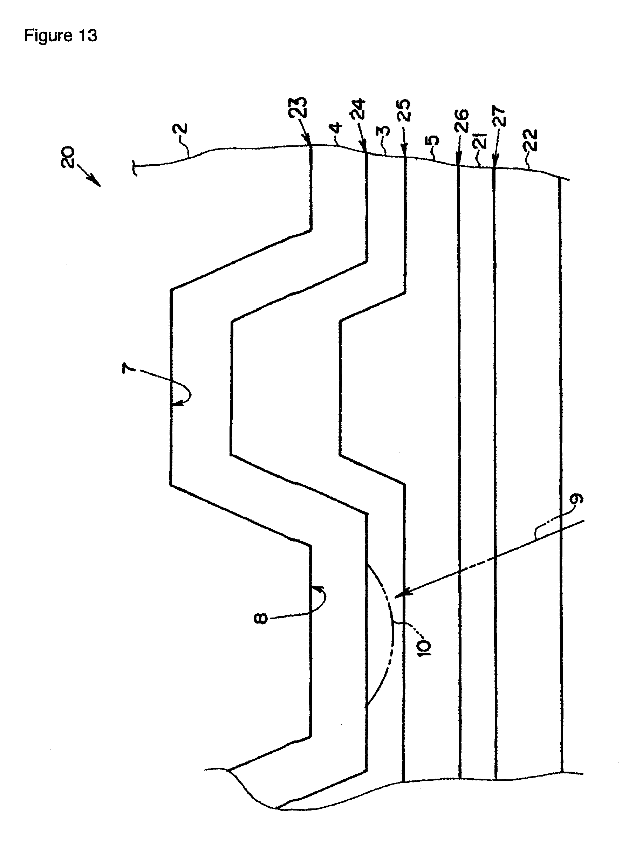

Further, FIG. 13 is an enlarged cross-sectional view schematically illustrating, as in the case of FIG. 12, a main portion of a disc-like optical information recording medium 20 of another type (Blue-ray postscript type) wherein a blue laser beam is utilized. In this case, the optical information recording medium 20 comprises a light-transmitting substrate 2 having a thickness of 1.1mm, a light-reflecting layer 4 formed on the substrate 2, an optical recording layer 3 (light-absorptive layer) formed on the light-reflecting layer 4, a protective layer 5 (adhesive layer) formed on the optical recording layer 3, an adhesive layer 21 formed on the protective layer 5, and a cover layer 22 having a thickness of 0.1mm and formed on the adhesive layer 21.

The substrate 2 is provided in advance with a pre-groove 7 which is formed spirally. On both sides of this pre-groove 7, there are located lands 8 constituting the regions other than the pre-groove 7.

By the way, if the a boundary layer between the substrate 2 and the optical recording layer 3 satisfies a low reflectance, the provision of light-reflecting layer 4 may not be required.

As shown in FIG. 13, as a laser beam (recording beam) 9 is irradiated onto the optical information recording medium 20 from the light-transmitting incident layer (the cover layer 22) employed as a layer for transmitting the laser beam, the optical recording layer 3 is caused to generate heat (or absorb heat) as the energy of the laser beam 9 is absorbed by the optical recording layer 3, thereby forming a recording pit 10 through the thermal decomposition of the optical recording layer 3.

By the way, the substrate 2 is contacted, through a first boundary layer 23, with the light-reflecting layer 4.

The light-reflecting layer 4 is contacted, through a second boundary layer 24, with the optical recording layer 3.

The optical recording layer 3 is contacted, through a third boundary layer 25, with the protective layer 5.

The protective layer 5 is contacted, through a fourth boundary layer 26, with the adhesive layer 21.

The adhesive layer 21 is contacted, through a fifth boundary layer 27, with the cover layer 22.

When a high-speed recording is to be performed by making use of the optical information recording medium 1 or the optical information recording medium 20, which are constructed as described above, it is required to perform a predetermined recording in a shorter period of time than that required in the conventional speed of recording or low speed recording, thus necessitating an enhanced recording power and increasing a quantity of heat or a quantity of heat per unit time to be generated at the optical recording layer 3 on the occasion of the recording. As a result, the problem of thermal strain tends to become more prominent, thus giving rise to the generation of non-uniformity of recording pits 10. Further, since there is a limit in increasing the output power of semiconductor laser for emitting the laser beam 9, it is now demanded to develop a dyestuff having such a high sensitivity that can be coped with a high-speed recording.

In an attempt to enhance the refractive index of the optical recording layer 3, it is now studied to utilize the state of association, in particular, J-association of dyestuff molecules. In this J-association, the dyestuff molecules are arrayed in a state of edge-to-edge, so that it is known that once this J-association is caused to occur, the peak of spectrum of light absorption is sharpened and that this sharp peak is caused to shift toward the longer wavelength side.

As for the conventional technique to create a J-association membrane, there are known an LB method, a Dip method, a spin-coating method, etc.

According to the LB method (Langmuir-Blodgett method: a method of forming a uniform membrane, wherein a molecule having both hydrophilic group and hydrophobic group is dissolved in a suitable solvent and allowed to spread over the surface of water to thereby form a layer adsorbed at an air/liquid interface, thus forming a monomolecular film on the surface of water, this monomolecular film being subsequently taken out of water by making use of a substrate which has been slowly dipped into the water, thereby forming a uniform membrane.), it is possible to form a precise and uniform membrane which is also excellent in optical properties. This method is however accompanied with the problems that since it requires a high degree of control on the occasion of forming the membrane, a lot of time as well as high manufacturing cost will be needed.

According to the Dipmethod (a method of forming a membrane, wherein a substrate is dipped in a solution of dyestuff and then taken out of the solution and dried to form a dyestuff film on the surface of the substrate), it is possible to easily perform the control of association. However, this method is accompanied with the problems that it is difficult to form a uniform membrane and also to stably maintain the membrane.

According to the spin-coating method (a method of forming a membrane, wherein a coating liquid is dropped onto a substrate while rotating the substrate, thus allowing the coated liquid to spread all over the substrate by the effect of centrifugal force), it is possible to form a membrane relatively easily. However, since molecules are permitted to exist in various states under simple coating conditions, this method is accompanied with a problem that it is difficult to control the association. Since this spin-coating method is advantageous in terms of simplicity of process and easiness of execution as compared with other methods, this spin-coating method is widely employed in the process of manufacturing optical information recording mediums such as CD-R and DVD-R.

As for the method of creating the J-association membrane by making use of a membrane-forming method such as the spin-coating method and the like, following methods are known up to date.

JP Patent Laid-open Publication (Kokai) No. 2001-199919 discloses a method of forming a J-association membrane of an organic dye (cyanine dye). Namely, by making use of a sol solution comprising cyanine dye and silica, a J-association membrane is formed.

According to this technique, since the concentration of cyanine dye in the membrane is diluted by the silica, it is impossible to secure a sufficient degree of physical properties as a dye membrane for optical information recording medium, thus rendering the dye membrane unsuitable for use as an optical information recording medium. Namely, it is difficult to apply this technique to the optical information recording medium.

JP Patent Laid-open Publication (Kokai) No. 2000-151904 discloses a method of forming a J-association membrane of an organic dye (cyanine dye). Namely, a high-viscosity solution comprising cyanine dye and a macromolecular material is subjected to a rubbing treatment to create a J-association membrane.

According to this technique, since the concentration of cyanine dye in the membrane is diluted by the macromolecular material, it is impossible to secure a sufficient degree of physical properties as a dye membrane for optical information recording medium, thus rendering the dye membrane unsuitable for use as an optical information recording medium. Furthermore, when the polycarbonate of substrate 2 is exposed to heating (130°C in temperature) which is required for the rubbing treatment, the substrate 2 will be caused to deform. Thus, it is difficult to apply this technique to the optical information recording medium.

JP Patent Laid-open Publication (Kokai) No. 2001-305591 discloses a method of forming a J-association membrane of an organic dye (squarylium dye). Namely, the J-association membrane is formed by means of spin-coating method using squarylium dye which is easy for forming the J-association membrane.

The technique disclosed in this publication is featured in that the squarylium dye is hardly soluble in an organic solvent and hence this technique is defective in that it is difficult to secure a sufficient solubility to a solvent which does not corrode polycarbonate employed as a material for the substrate 2 of optical information recording medium. Namely, it is difficult to form a membrane having a sufficient thickness for use as a dye membrane for the optical information recording medium. Further, when the molecule of this squarylium dye is chemically modified with a suitable substituent group, the formation of J-association membrane may be badly affected, thus rendering this technique complicated in practicing as it requires taking into consideration not only the solubility but also the property of association in designing the squarylium dye.

JP Patent Publication No. 3429521 discloses the employment of an LB film for forming an optical recording layer 3. Namely, in this publication, a substrate 2 having thereon a dye film comprising a photochromic dye is employed and the substrate 2 is formed of a ceramic substrate which is capable of emitting far-infrared rays. The optical information recording medium disclosed in this publication is featured in that this photochromic material is formed of a molecular association of dye, thus forming a spiropyrane J-association membrane. In this case, a chloroform solution comprising several kinds of cyanine dyes and a specific kind of fatty acid, which are mixed together at an appropriate ratio, is spread over the surface of water and then compressed to control the molecular orientation, thereby forming a monomolecular film. The monomolecular film is then deposited on a dye film comprising the aforementioned photochromic dye and adhered onto the substrate 2.

According to this technique, the surface of a non-fluorescent substrate is subjected to a treatment for making it hydrophobic by making use of trimethyl chlorosilane to create a substrate, on which the aforementioned monomolecular film having molecular orientation controlled is repeatedly adsorbed by means of perpendicular dipping method to form a 12-ply laminate of monomolecular film on one surface of the substrate. As a matter of fact however, it is difficult to obtain a sufficient thickness for use a dye membrane to be employed in the optical information recording medium, and it is also very difficult to apply the LB method to the existing optical information recording medium.

In spite of the fact that the J-association membrane is useful in obtaining a high-refractive index and for forming an optical recording layer 3 of the optical information recording medium 1 or 20, no one has succeeded as yet to establish a method of forming the J-association membrane, which is simple in process and easy to control. Although the LB method and Dip method are relatively easy in manufacturing process, these methods are accompanied with the problems that it requires a sophisticated controlling technique and that it is impossible to constantly obtain a uniform membrane. On the other hand, the spin-coating method is accompanied with a problem that, although it is possible to easily form a membrane, it is difficult to create the J-association membrane by means of this spin-coating method.

### DISCLOSURE OF THE INVENTION

### Problem to be solved by the invention

The present invention has been accomplished in view of overcoming the aforementioned problems and, therefore, an object of the present invention is to provide a monomethine dye compound which can be formed into a uniform membrane constituted by the J-association membrane of dye molecule. Another object of the present invention is to provide an optical information recording medium which is capable improving optical properties merely by directly forming a J-association membrane of the monomethine dye compound without necessitating the provision of any other auxiliary means. A further object of the present invention is to provide a method of manufacturing the optical information recording medium.

In another aspect of the present invention, the objects thereof are to provide a monomethine dye compound which can be formed into a membrane having a high-refractive index and excellent optical properties, an optical information medium comprising the monomethine dye compound and a method of manufacturing the optical information medium.

In a further aspect of the present invention, the objects thereof are to provide a monomethine dye compound which can be formed into an optical recording layer constituted by a J-association membrane by making use of a convenient method (spin-coating method), an optical information medium comprising the monomethine dye compound and a method of manufacturing the optical information medium.

In a further aspect of the present invention, the objects thereof are to provide a monomethine dye compound which can be made coatable by making use of a solvent which is incapable of eroding the material of substrate such as polycarbonate, an optical information medium comprising the monomethine dye compound and a method of manufacturing the optical information medium.

In a further aspect of the present invention, the objects thereof are to provide a monomethine dye compound which is excellent in sensitivity and in short mark recording ability, can be employed as a major component of a membrane of an optical recording layer and is suited for high-speed printing and high-density recording, to provide an optical information medium comprising the monomethine dye compound and to provide a method of manufacturing the optical information medium.

### Means for solving problem

Namely, the present invention is accomplished based on the facts that by making use of the spin-coating method, it is possible to easily coat and form a uniform membrane; that by making use of a dye material which is capable of forming a J-association membrane, it is possible to secure excellent optical properties (high-refractive index); that by making use of a monomethine dye compound including oxacyanine dye which is excellent in solubility as a dye material, it is possible to employ a solvent which is incapable of eroding the substrate; and that it is advantageous to employ a dye which makes it possible to enlarge the fluctuation of refractive index before and after the recording and can be decomposed as an endothermic reaction.

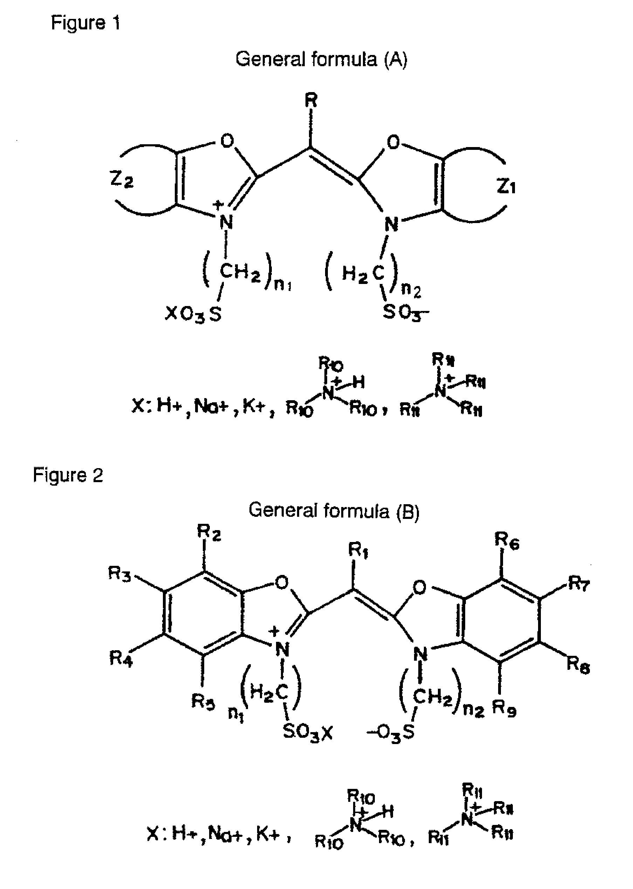

Namely, a first invention is related to a monomethine dye compound represented by the general formula (A) shown in FIG. 1.

A second invention is related to a monomethine dye compound represented by the general formula (B) shown in FIG. 2.

A third invention is related to an optical information recording medium comprising an optical recording layer for recording information by making use of a laser beam, which is featured in that the optical recording layer comprises a dye film forming a J-association membrane (alternatively, the optical recording layer comprises a dye film containing a monomethine dye compound represented by the general formula (A) shown in FIG. 1 and forming a J-association membrane), and that the optical recording layer is directly deposited on the rear side of a layer for enabling the laser beam to transmit therethrough.

Alternatively, the optical information recording medium comprising an optical recording layer for recording information by making use of a laser beam may be such that the optical recording layer is characterized to include a monomethine dye compound represented by the general formula (A) shown in FIG. 1.

A fourth invention is related to a method of manufacturing an optical information recording medium comprising a n optical recording layer for recording information by making use of a laser beam, wherein the optical recording layer is formed by coating a monomethine dye compound represented by the general formula (A) shown in FIG. 1 by means of a spin-coating method.

At least one of groups R₂ to R₉ in the general formula (B) may be constituted by Cl atom.

The monomethine dye compound can be employed in the optical recording layer of the optical information recording medium, which is designed to record information by means of laser beam.

The monomethine dye compound is capable of forming a J-association membrane.

The monomethine dye compound has a counter ion X which is constituted by an ammonium compound.

As for the solvent for dissolving the monomethine dye compound, it is possible to employ fluorinated alcohol such as 2,2,3,3-tetrafluoro-1-propanol, etc.

The solvent for dissolving the monomethine dye compound may be mixed with water.

The mixing ratio of water to the solvent may be confined within the range of 5 to 50% by volume.

The monomethine dye compound, the optical information medium comprising the monomethine dye compound and the method of manufacturing the optical information medium can be applied not only to the recording and regenerating information by means of a blue laser beam, but also to the recording or regenerating CD and DVD.

With respect to the synthesis and identification of the monomethine dye compound, they can be referred to the methods of synthesis and identification of the monomethine cyanine.

For example, there are known various synthesizing methods, as shown below (Reaction formula 5), such as the method disclosed in U.S. Patent No.2310640 (Synthesizing method 1), the method disclosed in U.S. Patent No.2485679 (Synthesizing method 2), and the method disclosed in U.S. Patent No.2310640 (Synthesizing method 3). In the synthesis of the monomethine dye compounds represented by the general formulas (A) and (B) of the present invention also, these synthesizing methods (Reaction formula 5) can be utilized, thereby adjusting the substituent groups as well as the side chains thereof and synthesizing these monomethine dye compounds. Themonomethine dye compounds thus synthesized can be analyzed by means of an NMR analyzer, a GC/MS analyzer, thus identifying specific monomethine dye compounds belonging to the aforementioned general formulas (A) and (B). As for a specific example where the substituent group and side chain are adjusted by making use of the synthesizing method 1, the synthesizing method represented by the general formula shown in Example 1 to be described later will be employed.

### Reaction formula 5

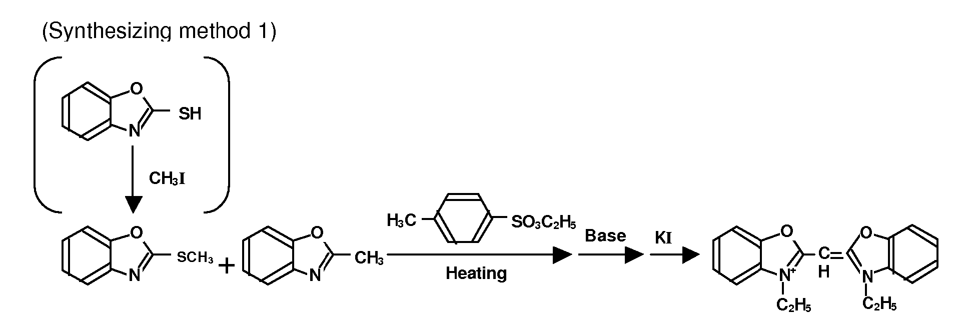

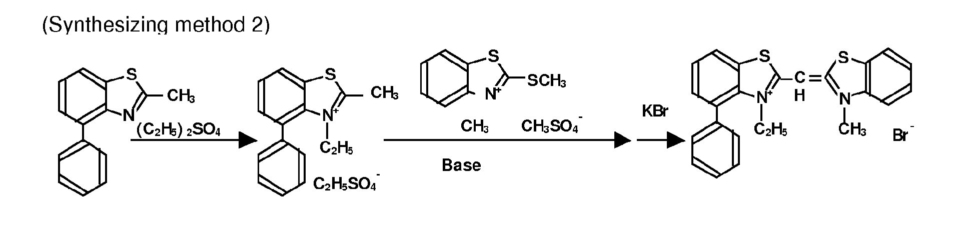

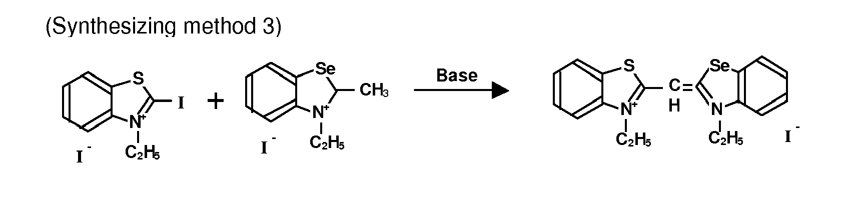

### EFFECT OF THE INVENTION

In the monomethine dye compound, the optical information medium comprising the monomethine dye compound and the method of manufacturing the optical information medium according to the present invention, since a specific kind of dye material, i.e. a monomethine dye compound shown in FIG. 1 is employed, it is now possible, by making use of a simple method of spin-coating, to form a uniform membrane through the J-association membrane of dye molecule. Since the absorption spectrum of dye membrane is sharpened and becomes longer in wavelength due to the J-association, it is now possible to form a membrane of high refractive index. Accordingly, due to the light absorption originating from the J-association of dye molecule, the associated dye can be thermally decomposed, thereby making it possible to easily generate a fluctuation of refractive index before and after the recording. Moreover, since the thermal decomposition of this J-associated dye is endothermic reaction, it is no longer required to perform the control of heat radiation originating from the exothermic reaction as in the case of the prior art.

Namely, according to the present invention, it is now possible to form a uniform membrane of recording material having excellent optical properties including a high-refractive index and easiness in generating a fluctuation of refractive index before and after the recording and also having excellent thermal properties represented by the endothermic reaction. Additionally, it is now possible to form a membrane of the aforementioned associated body by means of a simple method of spin-coating and to obtain an optical information recording medium exhibiting excellent properties without necessitating the modification of the conventional process.

Further, since a monomethine dye compound which is excellent in solubility is employed, it is possible to coat the dyestuff material by making use of a solvent which does not erode the substrate, such as 2,2,3,3-tetrafluoro-1-propanol (TFP).

In particular, according to the first invention, since it is proposed to employ a monomethine dye compound having a structure shown in FIG. 1, it is possible to create the J-association and to easily form a membrane of reduced thickness by means of spin-coating method, thereby making it possible to obtain a membrane having excellent optical properties as an optical recording layer of optical information recording medium.

Especially, according to the second invention, since it is proposed to employ a monomethine dye compound having a structure shown in FIG. 2, it is possible to create the J-association and to easily form a membrane of reduced thickness by means of spin-coating method, thereby making it possible to obtain a membrane having excellent optical properties as an optical recording layer of optical information recording medium.

Especially, according to the third invention, it is possible to form a uniformJ-association membrane as an optical recording layer without necessitating any specific treatment or additional provision of any auxiliary layer for achieving the J-association.

It is now made possible, through the formation of an optical recording layer by making use of a monomethine dye compound shown in FIG. 1 and a spin-coating method, to realize the sharpening of spectrum by the effect of the J-association and to increase the refractive index of the optical recording layer, thus making it possible to perform a high-speed and high-density recording.

Especially, according to the fourth invention, since a monomethine dye compound having a structure shown in FIG. 1 is employed, it is possible to form a thin membrane constituted by the J-association simply by means of a spin-coating method, thereby making it possible to form an optical information ecording medium which is excellent in optical properties.

### BRIEF DESCRIPTION OF THE DRAWINGS

FIG. 1 shows a general formula (A) of a monomethine dye compound (oxacyanine dye) to be employed in the present invention;
FIG. 2 shows a general formula (B) of a monomethine dye compound (oxacyanine dye) to be employed in the present invention;
FIG. 3 shows a general formula of an oxacyanine dye (compound I) employed in Example 1 of the present invention;
FIG. 4 shows a general formula of a cyanine dye (compound II) employed in Example 1 for the purpose of comparison;
FIG. 5 shows a graph illustrating the results of the spectral analysis of three kinds of compounds employed in Example 1;
FIG. 6 shows Table 1 illustrating the optical properties, at a wavelength of 420nm, of the membranes (on a single plate) of the compounds I and II;
FIG. 7 shows a general formula of the compound III (photo-stabilizing agent) employed in Example 2;
FIG. 8 shows Table 2 illustrating the results of assessment of electric properties of each of optical information recording mediums 1 manufactured in Example 2;
FIG. 9 shows a general formula of an oxacyanine dye (compound IV) employed in Example 3;
FIG. 10 shows a graph illustrating the absorption spectrums of the compound IV in TFP and in water;
FIG. 11 shows a graph illustrating the absorption spectrums of the compound IV in TFP and in chloroform;
FIG. 12 is an enlarged cross-sectional view of a main portion of an ordinary disc-like optical information recording medium 1; and
FIG. 13 is an enlarged cross-sectional view schematically illustrating a main portion of an ordinary disc-like optical information recording medium 20 of another type.

### DETAILED DESCRIPTION OF PREFERRED EMBODIMENTS

According to the present invention, monomethine dye compounds represented by the general formula shown in FIG. 1 are employed to form a membrane which is constituted by a J-association body, thereby making it possible, by means of simple spin-coating method, to obtain an optical information recording medium comprising an optical recording layer which is high in refractive index and excellent in uniformity.

FIG. 1 shows a general formula (A) of a monomethine dye compound (oxacyanine dye) to be employed in the present invention. The optical recording layer 3 of the optical information recording medium 1 or 20 is formed by making use of this monomethine dye compound.

This monomethine dye compound comprises, as a dye skeleton, oxacyanine (monomethine oxacyanine). The heteroatom "O" of -O- constituting the rings on both sides of dye skeleton of this oxacyanine may be substituted by S or Se. The heteroatom of one of these rings and the heteroatom of the other may be the same or different and are individually selected from the group consisting of O, S and Se. When the heteroatom "O" of one of the rings of the aforementioned general formula (A) is defined as Y1, and the heteroatom "O" of the other is defined as Y2, Y1 and Y2 may be the same or different and are individually selected from the group consisting of O, S and Se.

In the general formula (A), X represents an ion which is required for neutralizing the electric charge in the molecule and can be selected from the group consisting of H⁺, Na⁺, K⁺ and an ammonium compound (a tertiary ammonium compound, a quaternary ammonium compound).

n₁ and n₂ may be the same or different and are individually the number of alkyl chain (the number of carbon atom), i.e. an integer of 1-20.

Z₁ and Z₂ may be the same or different and are individually a group of atoms which are required for forming a five-membered or six-membered aromatic ring or nitrogen-containing heterocycle (i.e. a cyclic group selected from a five-membered aromatic ring, six-membered aromatic ring, a five-membered nitrogen-containing heterocycle and a six-membered nitrogen-containing heterocycle). Z₁ and Z₂ may include a substituent group.

R is hydrogen atom, halogen, aliphatic group, aromatic group or heterocyclic group.

R₁₀ and R₁₁ may be the same or different and are individually methyl, ethyl, propyl, butyl, pentyl or hexyl group. More preferably, R₁₀ should be selected from ethyl and propyl, and R₁₁ should be selected from lower alkyl groups such as ethyl and propyl. At least one of groups R₂ to R₉ should preferably be constituted by Cl atom. By the way, the rest of groups R₂ to R₉ may be a halogen group.

As for the aromatic ring, examples thereof include substituted or unsubstituted benzene ring or naphthalene ring. Z₁ may be selected from the following four kinds of general formulas (Chemical formulas 6) and Z₂ may be selected from the following four kinds of general formulas (Chemical formulas 7), wherein Z₁ and Z₂ may be the same with or different from each other. In these general formulas, D₁ and D₂ may be the same or different and are individually a substituent group selected from the group consisting of hydrogen atom, alkyl group, alkoxyl group, hydroxyl group, halogen atom, carboxyl group, alkoxycarbonyl group, alkyl carboxyl group, alkyl hydroxyl group, aralkyl group, alkenyl group, alkyl amide group, alkyl amino group, alkyl sulfone amide group, alkyl carbamoyl group, alkyl sulfamoyl group, alkyl sulfonyl group, phenyl group, cyano group, ester group, nitro group, acyl group, allyl group, aryl group, aryloxy group, alkylthio group, arylthio group, phenylazo group, pyridinoazo group, alkyl carbonyl amino group, sulfone amide group, amino group, alkyl sulfone group, thiocyano group, mercapto group, chlorosulfone group, alkyl azomethine group, alkyl aminosulfone group, vinyl group and sulfone group. p and q are the number of substituent groups and are individually an integer of one or more.

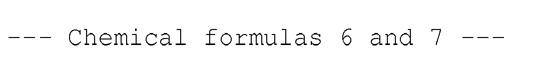

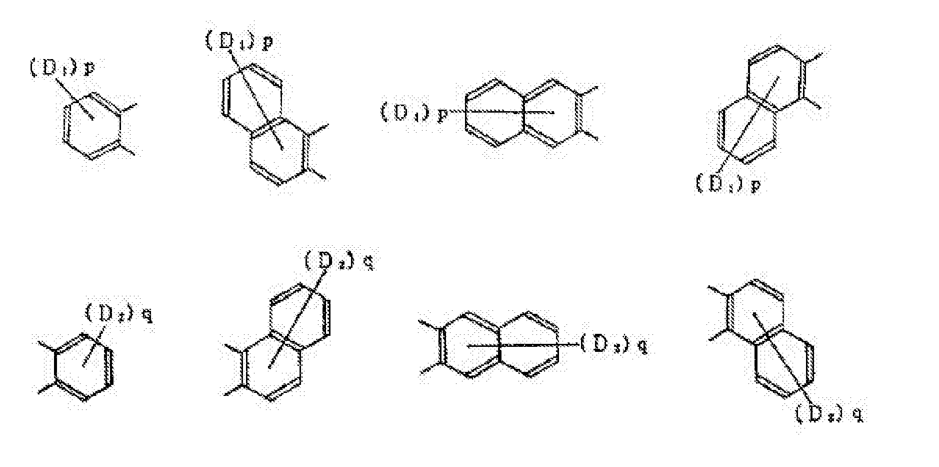

By the way, as described hereinafter in the Examples, when an ammonium compound is employed as a counter ion "X", water should not better be included in the solvent if it is desired to secure the solubility of dye. On the other hand, when H⁺, Na⁺ or K⁺ is employed as a counter ion "X", it is preferable or required to incorporate water into the solvent at a ratio of 5 to 50% by volume in order to enable the dye to be dissolved in the solvent.

In the present invention, it is also possible, through the employment of monomethine dye compound (oxacyanine dye) represented by the general formula (B) shown in FIG. 2, to form the optical recording layer 3 of the optical information recording medium 1 or 20.

As in the case of the aforementioned general formula (A), even in the general formula (B), X represents an ion which is required for neutralizing the electric charge in the molecule and can be selected from the group consisting of H⁺, Na⁺, K⁺ and an ammonium compound (a tertiary ammonium compound, a quaternary ammonium compound).

n₁ and n₂ may be the same or different and are individually the number of alkyl chain (the number of carbon atom), i.e. an integer of 1-20.

R₁, R₂, R₃, R₄, R₅, R₆, R₇, R₈ and R₉ represent hydrogen atom, halogen, aliphatic group, aromatic group or heterocyclic group. R₁₀ and R₁₁ may be the same or different and are individually methyl, ethyl, propyl, butyl, pentyl (or lower alkyl group) or hexyl group.

In the general formulas (A) and (B), some of R, R₁ to R₉ may be substituted by a substituent group. The examples of such a substituent group include aliphatic hydrocarbon group such as methyl, ethyl, propyl, isopropyl, butyl, isobutyl, sec-butyl, tert-butyl, pentyl, isopentyl, neopentyl, tert-pentyl, etc.; ether group such as methoxy, trifluoromethoxy, ethoxy, propoxy, isopropoxy, butoxy, tert-butoxy, pentyloxy, phenoxy, benzyloxy, etc.; ester group such as methoxycarbonyl, trifluoromethoxycarbonyl, ethoxycarbonyl, propoxycarbonyl, acetoxy, trifluoroacetoxy, benzoyloxy, etc.; alkyl sufonyl group such as methyl sulfonyl, ethyl sulfonyl, propyl sulfonyl, isopropyl sulfonyl, butyl sulfonyl, tert-butyl sulfonyl, pentyl sulfonyl, etc.; alkyl sulfamoyl group such as methyl sulfamoyl, dimethyl sulfamoyl, ethyl sulfamoyl, diethyl sulfamoyl, propyl sulfamoyl, dipropyl sulfamoyl, butyl sulfamoyl, dibutyl sulfamoyl, pentyl sulfamoyl, dipentyl sulfamoyl, etc.; halogen group such as fluoro group, chloro group, bromo group and iodo group; nitro group; and cyano group.

The aromatic ring should preferably be a monocyclic benzene ring, and the heterocycle should preferably contain one or more hetroatoms selected from the group consisting of nitrogen atom, oxygen atom, sulfur atom, selenium atom and tellurium atom.

More specifically, these aromatic ring and heterocycle may comprise one or more substituent groups such as aliphatic hydrocarbon group such as methyl, ethyl, propyl, isopropyl, butyl, isobutyl, sec-butyl, tert-butyl, pentyl, isopentyl, neopentyl, tert-pentyl, 1-methylpentyl, 2-methylpentyl, hexyl, isohexyl, 5-methylhexyl, etc.; alicyclic hydrocarbon group such as cyclopropyl, cyclobutyl, cyclopentyl, cyclohexyl, cyclohexenyl, etc.; aromatic hydrocarbon group such as phenyl, biphenyl, o-tolyl, m-tolyl, p-tolyl, o-cumenyl, m-cumenyl, p-cumenyl, xylyl, mecytyl, mesityl, styryl, cinnamoyl, naphthyl, etc.; ester groups such as methoxycarbonyl, ethoxycarbonyl, propoxycarbonyl, acetoxy, benzoyloxy, etc.; substituted or unsubstituted aliphatic, alicyclic or aromatic amino group such a s primary amino, methylamino, dimethylamino, ethylamino, diethylamino, propylamino, dipropylamino, isopropylamino, diisopropyl amino, butylamino, dibutylamino, etc.; alkyl sulfamoyl group such as methyl sulfamoyl, dimethyl sulfamoyl, ethyl sulfamoyl, diethyl sulfamoyl, propyl sulfamoyl, dipropyl sulfamoyl, isopropyl sulfamoyl, diisopropyl sulfamoyl, butyl sulfamoyl, dibutyl sulfamoyl, etc.; carbamoyl group; carboxyl group; cyano group; nitro group; hydroxyl group; sulfo group; sulfoamino group; sulfone amide group; etc.

If any cis/trans isomer is existed in the structure of the oxacyanine dye (monomethine dye compound) represented by the aforementioned general formulas (A) and (B), any of such a cis/trans isomer should be construed as included in the scope of the present invention.

Further, by suitably selecting the oxacyanine dyes having structures shown in FIGs. 1 and 2 and a solvent, it is possible, by means of spin-coating method, to easily form a membrane containing a J-association body.

Furthermore, by incorporating water into a solvent to be employed in the spin-coating method, i.e. a polar solvent which would not erode the substrate (at a ratio of 5 to 50% by volume; if the mixing ratio of water is less than this lower limit, the solubility of dye would become insufficient, and if the mixing ratio of water exceeds over this upper limit, the metallic material constituting the reflective layer may be badly affected), it is possible to enhance the solubility of dye, thus making it possible to enhance the capability of the dye to form the J-association.

As for the solvent, it is preferable to employ fluorinated alcohol such as 2,2,3,3-tetrafluoro-1-propanol, etc. However, it is also possible to chloroform, dichloroethane, methylethyl keton, dimethyl formamide, methanol, toluene, cyclohexane, acetyl acetone, diacetone alcohol, Cellosolves such as methyl Cellosolve, dioxane, etc. in such an amount that would not erode the substrate. These solvents can be employed singly or in combination thereof and in combination with fluorinated alcohol.

By making use of a dyestuff which is capable of forming the J-association as described above, it is now possible to enhance the refractive index of the optical recording layer 3 and to easily reduce the film thickness of the optical recording layer 3, thus making it possible to manufacture the optical information recording medium 1 or 20 which enables to secure a high-modulating property and has excellent recording properties at a wavelength range in the vicinity of 350 to 500nm. Namely, as the J-association is destroyed on the occasion of recording, a fluctuation (or difference) of refractive index before and after the recording can be secured, thus making it possible to improve the recording sensitivity.

By the way, while the thermal decomposition of ordinary dye takes place as an exothermic reaction, the thermal decomposition of the oxacyanine dye to be employed in the present invention takes place as an endothermic reaction when the oxacyanine dye is in a state of J-association, thus making it possible to suppress the diffusion of heat on the occasion of this decomposition.

### Examples:

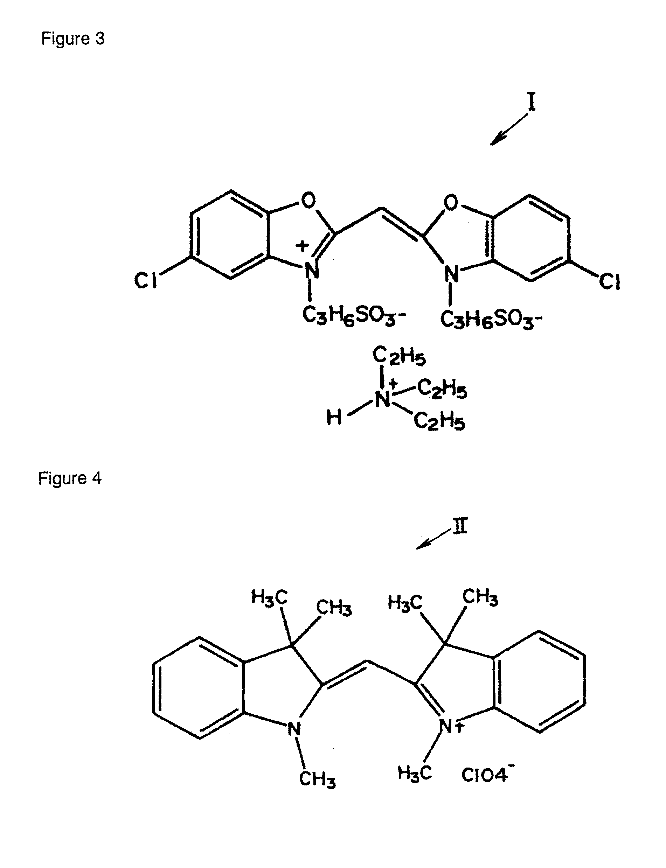

Next, the dyestuffs to be employed in the fabrication of an optical information recording medium, the optical information recording mediums fabricated by making use of the dyestuffs, and the methods of manufacturing the optical information recording mediums according to the examples of the present invention will be explained with reference to FIGs. 3 to 11. In these FIGs., the same parts or components as those of FIGs. 12 and 13 will be referred to by the same symbols, thus omitting the detailed explanations thereof.

### (Example 1)

A synthesizing method for adjusting the substituent groups and side-chains wherein general formulas are employed and the synthesizing method 1 (reaction formula (5)) set forth hereinabove is utilized is shown below (reaction formula (8)). In these general formulas, Z₁, Z₂ and n (n₁=n₂=n) are the same as those of the aforementioned general formula (A), and R is hydrogen atom or a substituent group.

More specifically, by way of the synthesizing method shown below (reaction formula (9)), the oxacyanine dye compound (monomethine dye compound) shown in FIG. 3 can be synthesized. As a matter of fact, the products are confirmed by making use of an NMR analyzer.

### Reaction formula (8)

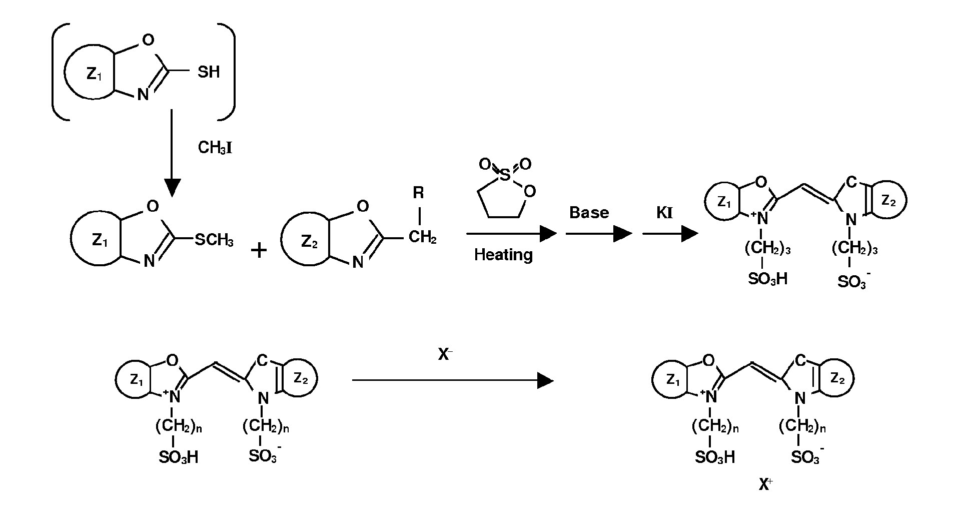

### Reaction formula (9)

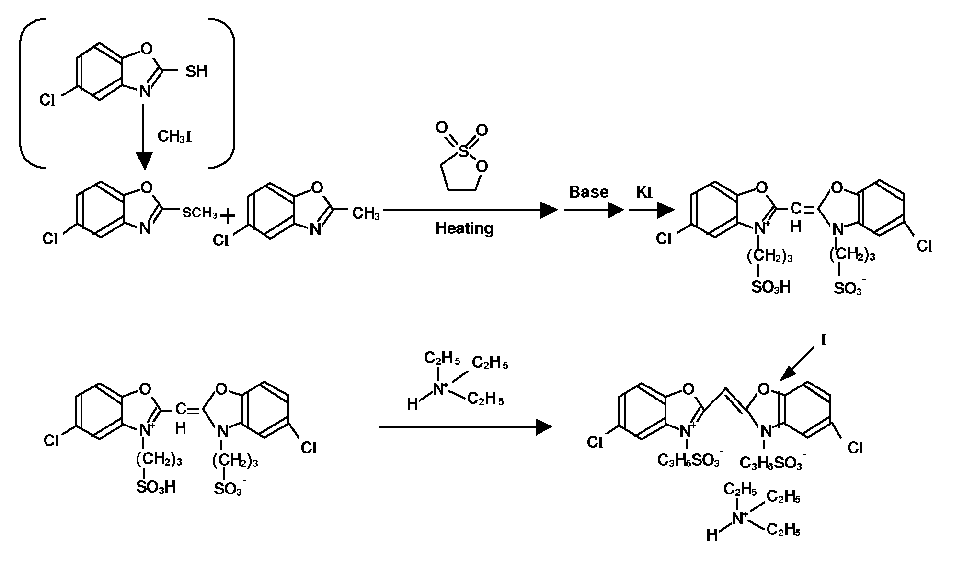

### (Example 2)

1.5g of the oxacyanine dye (Compound I) was dissolved in 100mL of 2,2,3,3-tetrafluoro-1-propanol (TFP) to prepare a

### 15g/L solution.

0.25mL of this solution was dropped in a 1000mL graduated flask and then 2, 2, 3, 3-tetrafluoro-1-propanol was added to this solution to obtain a 1000mL of a mixed solution. After this mixed solution was fully agitated, the spectral analysis of this mixed solution was performed.

1mL of the mixed solution thus prepared was dropped onto the surface of a single glass plate 0.6mm (thickness) x 4cm x 4cm in size and the glass plate was rotated at a rotational speed of 300rpm to perform spin-coating form 30 seconds to thereby obtain a uniform J-association membrane.

For the purpose of comparison, cyanine dye (the compound II, FIG. 4) was spin-coated on the surface of the glass plate in the same manner as in the case of the aforementioned compound I.

These glass plates provided with these compounds I and II, respectively, were then subjected to the spectral analysis.

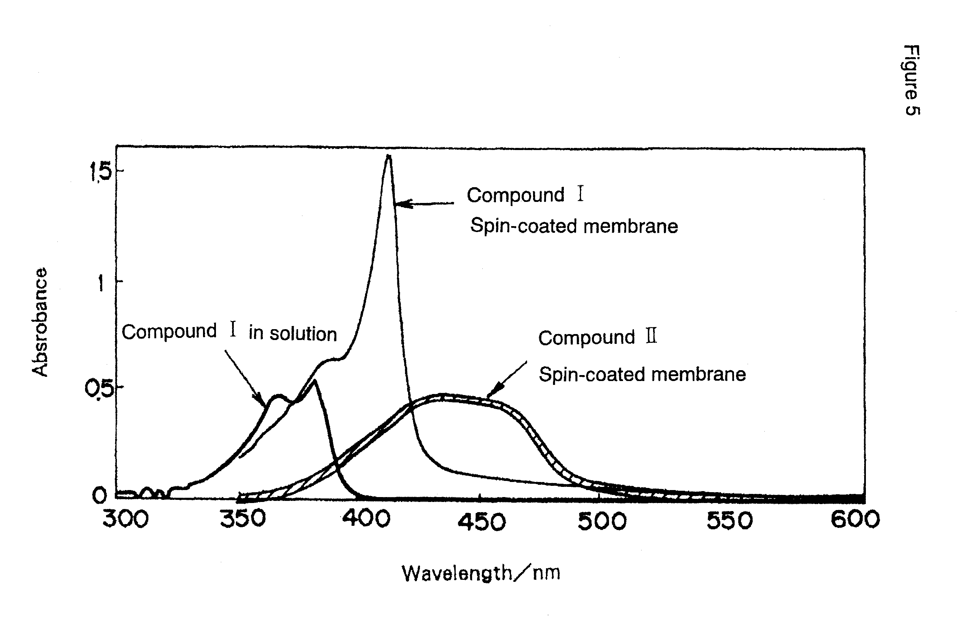

FIG. 5 is a graph illustrating the results of the spectral analysis of the aforementioned three kinds of compounds. It will be clear from the comparison between the absorption spectrum of the compound I in the solution and the absorption spectrum of the compound I on the glass plate that the shape of the spectrum of the glass plate was more sharpened and shifted toward the longer wavelength side, thus indicating the characteristics of the J-association, as compared with the absorption spectrum of the compound I in the mixed solution. Further, it will be realized that as compared with the compound II where the dye molecule did not indicate the characteristics of J-association and was placed in a relatively dispersed state even if it was formed into a membrane, the spectrum of the membrane of the compound I was more sharpened.

As described above, the membrane of dye indicating the formation of J-association body can be identified by observing the changes of absorption spectrum between the liquid state of compound and the membranal state of compound.

For example, the formation of J-association body can be confirmed from the facts that the absorption peak derived from the membranal state of compound is shifted toward the longer wavelength side as compared with the absorption peak derived from a dissolved state of compound and that a half band width of the absorption spectrum of the membranal state of compound is much narrower than that of the absorption spectrum of the liquid state of compound.

However, the formation of J-association body can be confirmed, other than the aforementioned method, from various methods. For example, it may be confirmed by comparing, in the same manner as described above, the absorption spectrum of a monomer in the solution with the absorption spectrum of the membranal state of the compound.

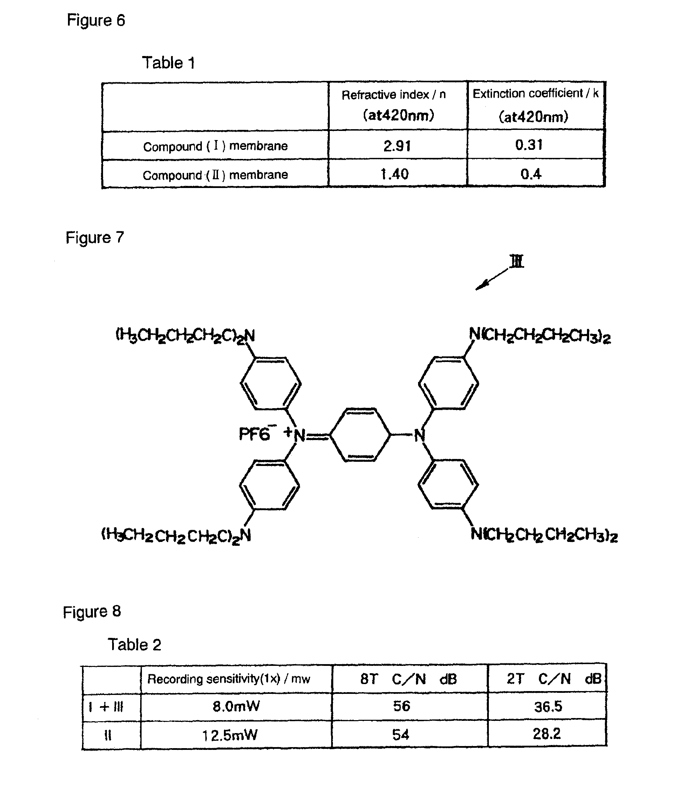

FIG. 6 shows Table 1 illustrating the optical properties, at a wavelength of 420nm, of the membranes (on a single plate) of the compounds I and II. It will be recognized from FIG. 6 that due to the formation of the J-association body, it was possible to enhance the refractive index n, thus indicating excellent optical properties.

By the way, the life of fluorescence of each of the compounds I and II was measured. In the case of the compound I where the J-association is formed, the life of fluorescence was 29ps, while in the case of the compound II where the J-association is not formed, the life of fluorescence was 4ps. Since the life of fluorescence is 51ps in the case of ordinary J-association membrane (J. Phys. Chem., 2000, 104, 9630 (N. Kometani, H. Nakajima, K. Asami, Y. Yonezawa, O. Kajimoto)), the life of fluorescence of the compounds I was longer than the life of fluorescence of the compounds II and was about 50% of the ordinary J-association membrane.

Further, the phosphorescence of each of the compounds I and II was measured. As a result, while the phosphorescence was not observed in the case of the compound I, the phosphorescence was observed in the case of the compound II.

As described above, in the case of cyanine dye membrane of the compound II, it was impossible to form the J-association body. Whereas, in the case of oxacyanine dye membrane of the compound I, it was possible to form the J-association body. Hence, by spin-coating the compound I, it was possible to more easily form a uniform J-association membrane.

### (Example 3)

An example where the compound I (J-association-forming oxacyanine dye membrane, FIG. 3) employed in Example 1 was applied to the formation of the optical recording layer 3 of optical information recording medium 1 will be explained as follows.

1.5g of the oxacyanine dye (Compound I) was dissolved in 100mL of 2,2,3,3-tetrafluoro-1-propanol to prepare a 15g/L solution. By the way, a compound III shown in FIG. 7 was incorporated, as a photostabilizer, into the solution at a weight ratio of 30%. By the way, it is also possible to employ other kinds of photostabilizer such as an aminium-based stabilizer and diimonium-based stabilizer.

1mL of this coating solution was applied to the surface of a disc-like polycarbonate substrate 2 having an outer diameter of 120mm and a thickness of 0.6mm and provided with a pre-groove 7 formed at a pitch of 0.40µm intervals. Then, the substrate 2 was rotated at a predetermined rotational speed, thereby spin-coating the solution to form a uniform J-association membrane.

The transparent substrate 2 having this dye coated thereon was heat-treated for 30 minutes at a temperature of 80°C to volatilize residual solvent and water to form a dye-face (optical recording layer 3).

Further, silver (Ag) was sputtered to form a light reflection layer 4 having a thickness of 100nm on the surface of the optical recording layer 3.

By the way, the substrate 2 was washed with methanol to wash away the dyestuff that had been scattered and adhered on the outer peripheral edge or inner peripheral portion thereof.

Furthermore, an ultraviolet-curing type resin adhesive (SD-318; Dainippon Ink Chemical Industries) was spin-coated on the surface of the light reflection layer 4 and irradiated with ultraviolet rays to cure the resin adhesive to form a protective layer 5.

An ultraviolet-curing resin adhesive was coated on the surface of this protective layer 5 and then a dummy substrate 6 formed of the same material and the configuration (0.6mm in thickness and 120mm in outer diameter) as those of the substrate 2 was adhered on the surface of this protective layer 5. Subsequently, the adhesive was irradiated with ultraviolet rays to cure the adhesive, thus manufacturing a write once-type optical information recording medium 1.

In this manner, it was possible, through the employment of the compound 1, to obtain the optical information recording medium 1 provided with an optical recording layer 3 which as constituted by a uniform J-association membrane of oxacyanine dye.

Further, by making use of the compound II (FIG. 4) employed in Example 1, an optical recording layer 3 was formed in the same manner as described above, thus obtaining an optical information recording medium 1.

FIG. 8 shows Table 2 illustrating the results of assessment of electric properties of each of optical information recording mediums 1. It will be recognized from FIG. 8 that as compared with the optical information recording mediums 1 having the optical recording layer 3 which was prepared from the compound II, the optical information recording mediums 1 having the optical recording layer 3 which was prepared from the compound I was more excellent in recording sensitivity as the power required for the recording could be lowered. Further, it was possible, according to the optical information recording mediums 1 manufactured by making use of the compound I, to improve the C/N level of shortest mark length and to achieve the symmetry at a lower power on the occasion of recording random recording signals.

### (Example 4)

Next, an experiment to confirm the dependency of using a solution of J-association will be explained.

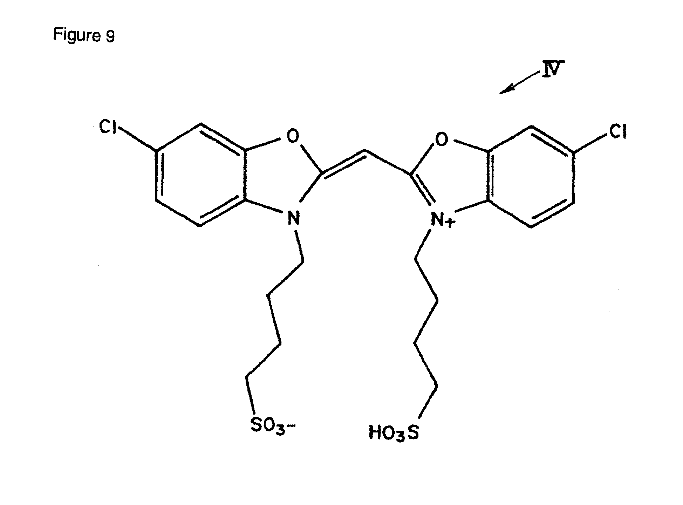

1.5g of the oxacyanine dye (Compound IV) shown in FIG. 9 was dissolved in a mixed solution comprising 50mL of 2,2,3,3-tetrafluoro-1-propanol (TFP) and 50mL of water to prepare a 15g/L solution.

0.25mL of this solution was dropped in a 1000mL graduated flask and then 2, 2, 3, 3-tetraf luoro-l-propanol was added to this solution to obtain a 1000mL of a mixed solution. After this mixed solution was fully agitated, the spectral analysis of this mixed solution was performed.

1mL of the mixed solution thus prepared was dropped onto the surface of a single glass plate 0.6mm (thickness) x 4cm x 4cm in size and the glass plate was rotated at a rotational speed of 300rpm to perform spin-coating for 30 seconds to thereby obtain a uniform J-association membrane.

For the purpose of comparison, in the same manner as described above, 1.5g of oxacyanine dye (the compound IV, FIG. 9) was dissolved in a mixed solution comprising 50mL of 2, 2, 3, 3-tetrafluoro-1-propanol (TFP) and 50mL of chloroform to prepare a 15g/L solution.

As in the case of the aforementioned mixed solution comprising TFP and water, 0.25mL of this 15g/L solution was dropped in a 1000mL graduated flask and then 2,2,3,3-tetrafluoro-1-propanol was added to this solution to obtain a 1000mL of a mixed solution. After this mixed solution was fully agitated, the spectral analysis of this mixed solution was performed.

As in the case of the aforementioned mixed solution comprising TFP and water, 1mL of the mixed solution thus prepared was dropped onto the surface of a single glass plate 0.6mm (thickness) x 4cm x 4cm in size and the glass plate was rotated at a rotational speed of 300rpm to perform spin-coating for 30 seconds to thereby obtain a uniform J-association membrane.

These compounds IV (four kinds, i.e. two kinds for the solution and two kinds for the plate) were analyzed by way of spectrometry.

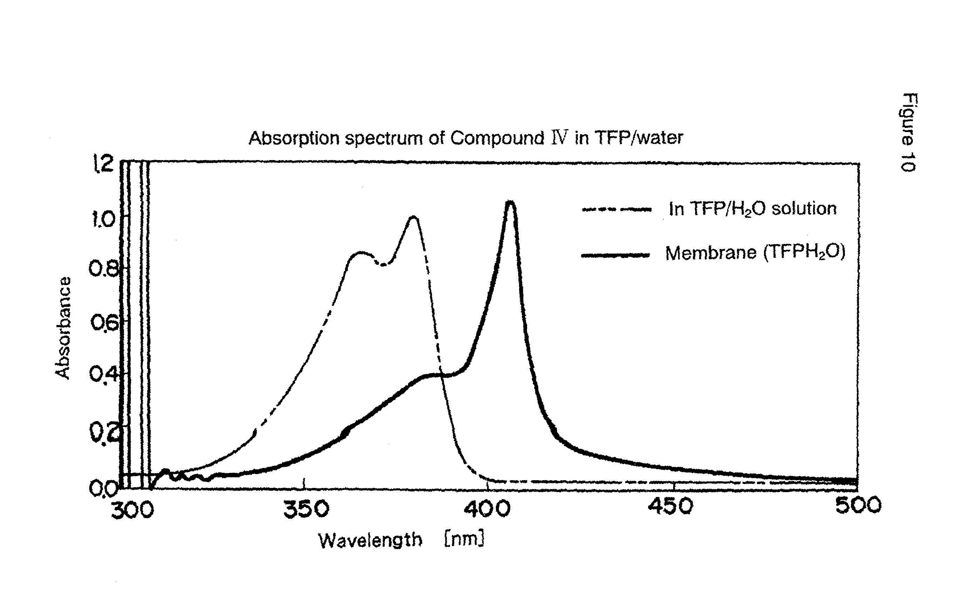

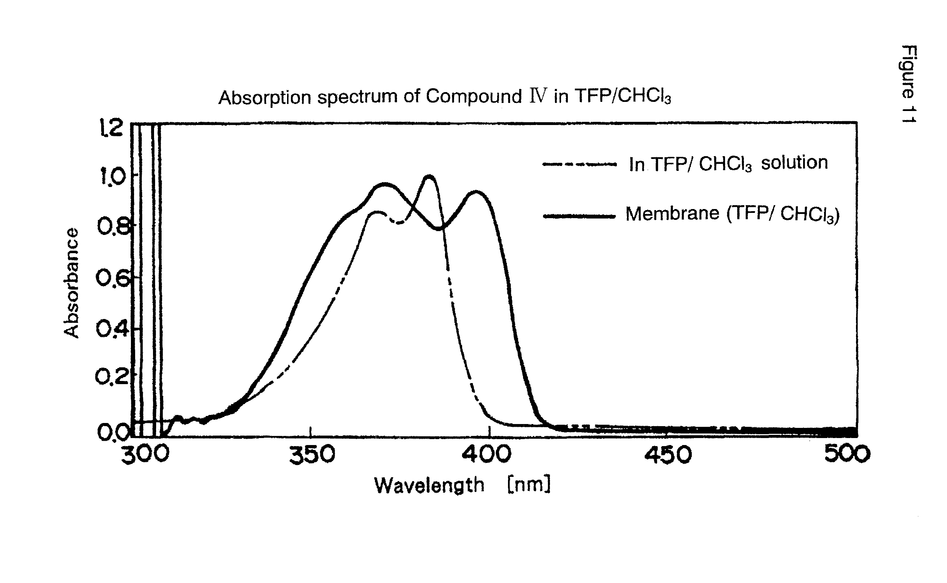

FIG. 10 shows a graph illustrating the absorption spectrums of the compound IV in TFP and in water. FIG. 11 shows a graph illustrating the absorption spectrums of the compound IV in TFP and in chloroform. InFIGs. 10 and 11, the absorption spectrums in the solution and of the membrane are illustrated.

As shown in FIG. 10, it will be clear from the comparison between the absorption spectrum of the compound IV in the solution and the absorption spectrum of the compound IV on the glass plate that the shape of the spectrum of the glass plate was more sharpened and shifted toward the longer wavelength side, thus indicating the formation of the J-association.

As shown in FIG. 11, even in the case of the compound IV, if chloroform was mixed with TFP instead of using water as a solvent, it was impossible to confirm any tendency of shifting the spectrum toward the longer wavelength side or of sharpening the spectrum in both of the glass plate and the solution, thus indicating no formation of J-association.

By the way, when the membrane of the compound IV on the glass plate was identified in the same manner as illustrated in Example 1 (observation of the life of fluorescence and phosphorescence), the existence of J-association thereof was recognized.

By the way, the mixing ratio of water to TFP should preferably be confined within the range of 5 to 50% by volume. If the mixing ratio of water is less than 5% by volume, it may be impossible to fully dissolve the compound IV in the solvent (TFP). If the mixing ratio of water exceeds over 50% by volume, the metallic material of the light-reflecting layer 4 formed on the optical recording layer 3 may be badly affected.

Further, in the foregoing examples, the optical recording layer was constituted by a layer of single dyestuff, i.e. a monomethine dye compound. However, it is also possible to employ the monomethine dye compound in combination with other kinds of dyes such as cyanine dye, phthlocyanine dye, azo dye, etc. or in combination with an additive in forming the optical recording layer.

## Claims

1. A monomethine dye compound represented by the following general formula (A): 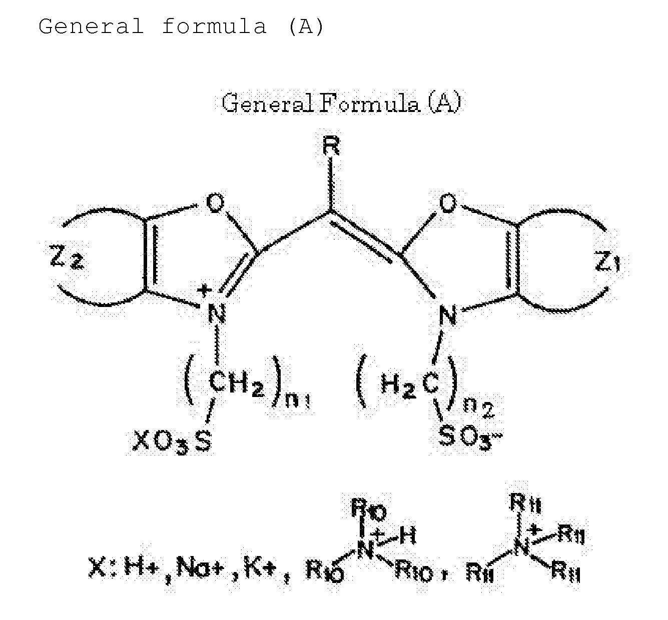 (wherein Z₁ and Z₂ may be the same or different and are individually a group of atoms which are required for forming a five-membered or six-membered aromatic ring or nitrogen-containing heterocycle, Z₁ and Z₂ optionally having a substituent group; R is hydrogen atom, halogen, aliphatic group, aromatic group or heterocyclic group; R₁₀ and R₁₁ may be the same or different and are individually methyl, ethyl, propyl, butyl, pentyl or hexyl group; and n₁ and n₂ may be the same or different and are individually the number of carbon atom in the alkyl chain, i.e. an integer of 1-20).

2. A monomethine dye compound represented by the following general formula (B) : 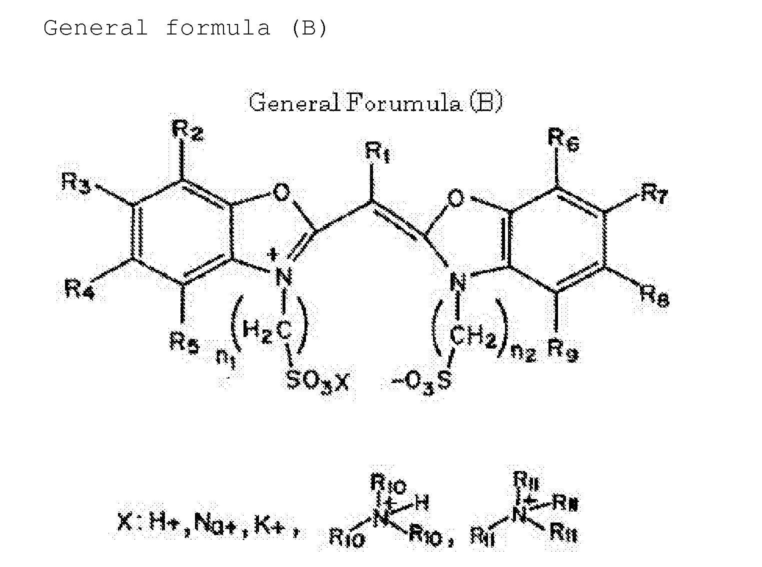 (wherein R₁ to R₉ may be the same or different and are individually hydrogen atom, halogen, aliphatic group, aromatic group or heterocyclic group; R₁₀ and R₁₁ may be the same or different and are individually methyl, ethyl, propyl, butyl, pentyl or hexyl group; and n₁ and n₂ may be the same or different and are individually the number of carbon atom in the alkyl chain, i.e. an integer of 1-20).

3. The monomethine dye compound according to claim 2, wherein at least one of groups R₂ to R₉ in the general formula (B) is constituted by Cl atom.

4. The monomethine dye compound according to any one of claims 1 to 3, which is adapted to be employed in an optical recording layer of the optical information recording medium, which is designed to record information by means of laser beam having a wavelength ranging from 350 to 500nm.

5. The monomethine dye compound according to any one of claims 1 to 4, which is enabled to be formed into a J-association.

6. The monomethine dye compound according to any one of claims 1 to 5, wherein a counter ion X thereof is constituted by an ammonium compound.

7. An optical information recording medium comprising an optical recording layer for recording information by making use of a laser beam, which is featured in that the optical recording layer comprises a dye film forming a J-association membrane and that the optical recording layer is directly deposited on the rear side of a layer for enabling the laser beam to transmit therethrough.

8. The optical information recording medium according to claim 7, wherein the optical recording layer is formed of a dye membrane containing a monomethine dye compound which is capable of forming a J-association body.

9. The optical information recording medium according to claim 8, wherein the optical recording layer contains a monomethine dye compound represented by the following general formula (A): 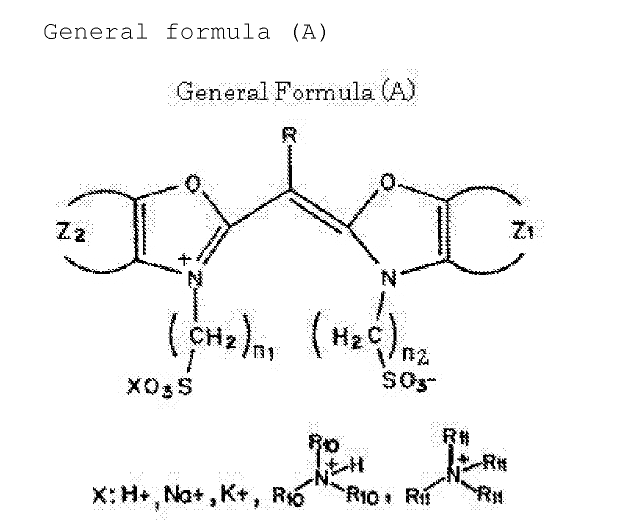 (wherein Z₁ and Z₂ may be the same or different and are individually a group of atoms which are required for forming a five-membered or six-membered aromatic ring or nitrogen-containing heterocycle, Z₁ and Z₂ optionally having a substituent group; R is hydrogen atom, halogen, aliphatic group, aromatic group or heterocyclic group; R₁₀ and R₁₁ may be the same or different and are individually methyl, ethyl, propyl, butyl, pentyl or hexyl group; and n₁ and n₂ may be the same or different and are individually the number of carbon atom in the alkyl chain, i.e. an integer of 1-20).

10. The optical information recording medium according to any one of claims 7 to 9, wherein the laser beam has a wavelength region ranging from 350 to 500nm.

11. The optical information recording medium according to any one of claims 7 to 10, wherein the optical recording layer is a dye membrane formed of a mixture containing amonomethine dye compound.

12. The optical information recording medium according to any one of claims 9 to 11, wherein themonomethine dye compound includes, as a counter ion X, an ammonium compound.

13. A method of manufacturing an optical information recording medium comprising an optical recording layer for recording information by making use of a laser beam, wherein the optical recording layer is formed by coating a monomethine dye compound represented by the following general formula (A) by means of a spin-coating method: 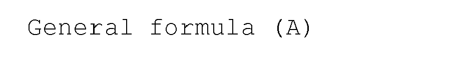 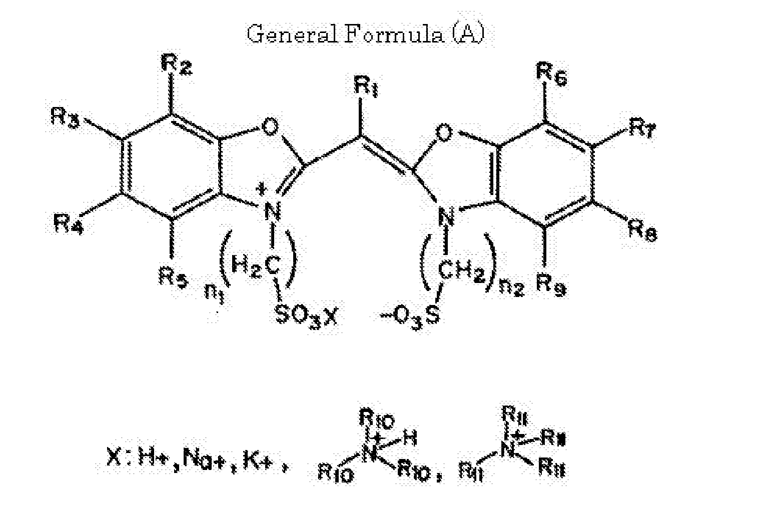 (wherein Z₁ and Z₂ may be the same or different and are individually a group of atoms which are required for forming a five-membered or six-membered aromatic ring or nitrogen-containing heterocycle, Z₁ and Z₂ optionally having a substituent group; R is hydrogen atom, halogen, aliphatic group, aromatic group or heterocyclic group; R₁₀ and R₁₁ may be the same or different and are individually methyl, ethyl, propyl, butyl, pentyl or hexyl group; and n₁ and n₂ may be the same or different and are individually the number of carbon atom in the alkyl chain, i.e. an integer of 1-20).

14. The method of manufacturing an optical information recording medium according to claim 13, wherein the monomethine dye compound is capable of forming a J-association body.

15. The method of manufacturing an optical information recording medium according to claim 13 or 14, wherein the monomethine dye compound includes, as a counter ion X, an ammonium compound.

16. The method of manufacturing an optical information recording medium according to any one of claims 13 to 15, wherein fluorinated alcohol such as 2,2,3,3-tetrafluoro-1-propanol is employed as a solvent for dissolving the monomethine dye compound.

17. The method of manufacturing an optical information recording medium according to any one of claims 13 to 16, wherein the solvent for dissolving the monomethine dye compound is mixed with water.

18. The method of manufacturing an optical information recording medium according to claim 17, wherein the mixing ratio of water to the solvent is confined within the range of 5 to 50% by volume.
